# EUROPEAN PATENT APPLICATION

(11) **EP 3 608 998 A1**
(43) Date of publication of application: **12.02.2020**
(21) Application number: 18187986.7
(22) Date of filing: 08.08.2018
(51) Int. Cl.: H01M 4/04, H01M 4/139, H01M 4/13, H01M 10/0562, H01M 10/052

(54) **METHOD FOR FABRICATING A CATHODIC ELECTRODE FOR A SOLID-STATE BATTERY**

(71) Applicant: Robert Bosch GmbH, 70442 Stuttgart (DE)
(72) Inventor: Kim, Taesung, 70469 Stuttgart (DE); Choi, Joo Young, 71636 Ludwigsburg (DE); Choi, Younggeun, 70469 Stuttgart-Feuerbach (DE); Shim, Heungtaek, 71522 Backnang (DE); Roh, Hyunchul, 70565 Stuttgart-Rohr (DE)

(57) **Abstract**

Proposed is a method for fabricating a cathodic electrode for a solid state battery comprising the steps coating, drying, pressure treatment, soaking into aqueous carbon solution, heat treatment.

## Description

### Technical Field

The invention relates to a method for fabricating a cathodic electrode for a solid-state battery.

### Prior Art

US 2015/174790 A1 discloses a manufacturing process of a positive electrode active material.

WO 2016/058491 A1 shows a method for carbon coating on an electrode active material of a lithium ion battery.

### Disclosure of the invention

Proposed is a method for fabricating a cathodic electrode for a solid-state battery comprising the steps of coating the cathode, drying the cathode, soaking the cathode into aqueous carbon solution, and heat treatment, which preferably is at least partially subsequent to the soaking step. Preferably, the heat treatment is divided into two separate heat treatment steps, a first heat treatment and a later second heat treatment. Preferably, the first heat treatment is carried out before the soaking into the aqueous carbon solution and the second heat treatment is carried out after the soaking into the aqueous carbon solution.

Using this preferred method, the active area of the active materials is increased as pores in the cathodic electrode are filled with conducting materials. This contributes to reducing the resistance for the cathodic charge transfer. Second, the maximum temperatures for heat treatment can be reduced to less than 1000° C and preferably to equal or less than 900° C. This contributes to lowering manufacturing cost as well as preventing unwanted side reactions at the cathodic side as well as to the reduction of the resistance at the cathodic side (ohmic or charge transfer, diffusion in solid state), resulting in a better performance of the cathode.

As a preferred embodiment, for the first heat treatment and the second heat treatment, respectively, maximum temperature ranges of 600° C to 900° C and 550° C to 850° C, respectively, are proposed. It is preferred that a maximum temperature of the second heat treatment is equal to or lower than a maximum temperature of the first heat treatment in order to not affect the state of the sintered cathodic material.

### Drawings

Figure 1 schematically shows an exemplary configuration of a solid-state battery.
Figure 2 schematically shows steps of a method for fabricating a cathodic electrode for a solid-state battery.
Figure 3 schematically shows exemplary steps of a preferred method for fabricating a cathodic electrode for a solid-state battery.

### Description of Embodiments

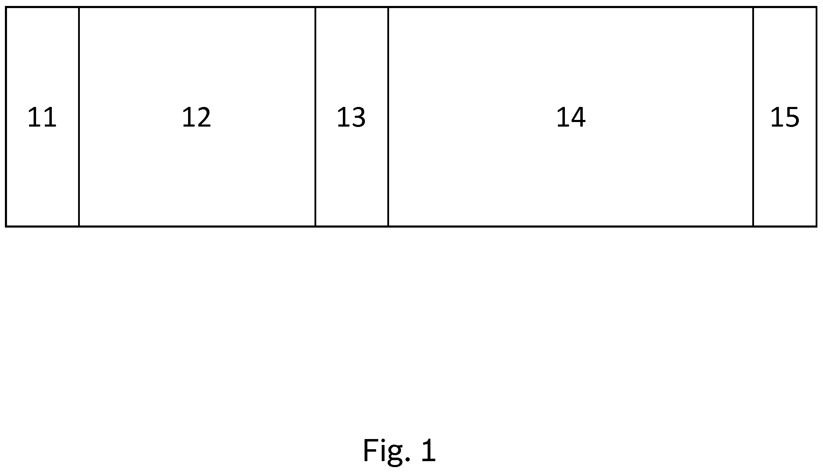

Figure 1 shows an exemplary configuration of a solid-state battery, comprising a current collector 11, an anode 12, an oxide electrolyte 13 as separator, a cathode 14 and a current collector 15.

While Li ion batteries are broadly employed for electric vehicles, problems remain such as energy density and safety. To address some of the problems, solid electrolytes could be used instead of liquid electrolytes. Among the solid electrolytes, oxide-based electrolyte is one of the potential materials as it shows a high ionic conductivity over a broad range of operating temperature, while being stable in ambient air even in the presence of water and being sufficiently hard to prevent Li dendrite growth. Examples of oxide based electrolytes are the Perovskite type (Li_{0.35}La_{0.55}TiO₃), the Garnet type (Li₅La₃Ta₂O₁₂, Li₇La₃Zr₂O₁₂), and
NASICON type (Li₁₊ₓAlₓTi₂₋ₓ(PO₄)₃ with x=0.4). However, potential candidates exhibit problems such as stiffness, grain-boundary resistance and porosity reducing the contact area among the active materials, conducting materials and electrolyte after sintering.

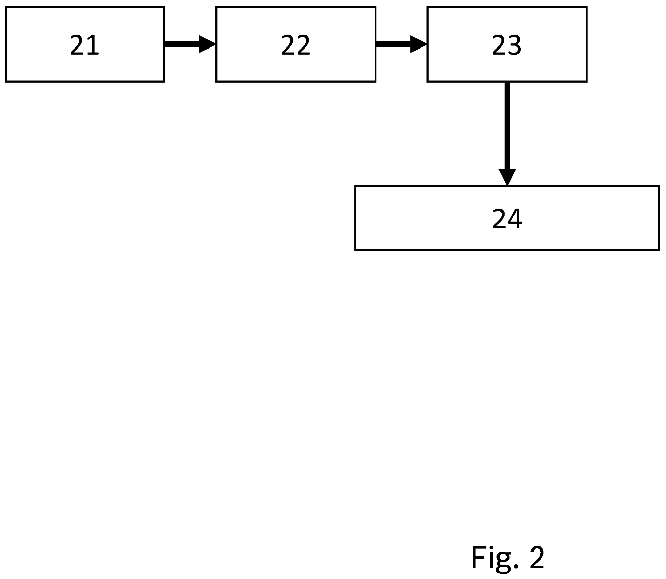

In Figure 2, a possible fabrication process for cathodic electrodes is shown. The process starts with step 21, mixing of cathode active materials, carbon, an oxide electrolyte, a solvent and (optionally) a binder. Afterwards, cathode coating is carried out in step 22, followed by drying of the cathode in step 23, especially for evaporation of the solvent. In the following step 24, pressure treatment and heat treatment are employed for densification of the cathode. The heat treatment is done at maximum temperatures of 1000° C to 1100° C. Such high temperatures are need to achieve sufficient contact between cathode active materials and oxide electrolyte due to the stiffness of oxide electrolyte. While such a procedure results in functional cathode electrodes, it was found that there might still be pores left in the cathode material reducing the active area of the active materials due to reduced contact among active materials, conducting materials and electrolyte. Using an even higher temperature would reduce the porosity, but would lead to higher cost.

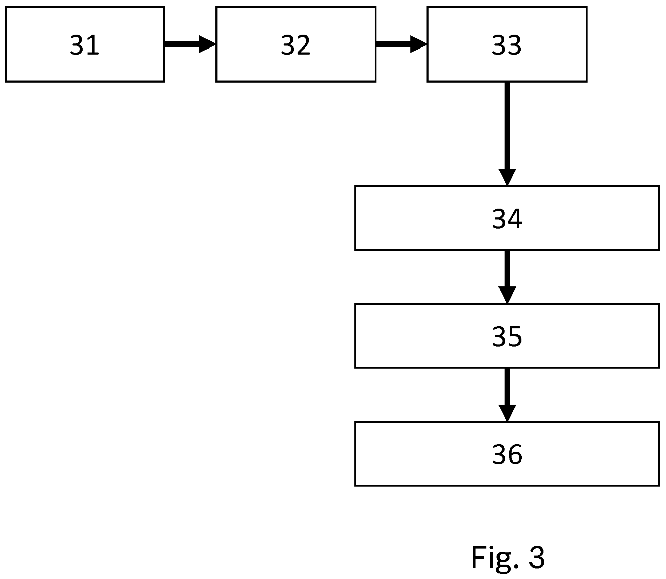

In Figure 3, a preferred alternative fabrication method for a cathode is shown.. The process starts with step 31, mixing of cathode active materials, carbon, an oxide electrolyte, a solvent and (optionally) a binder. Afterwards, cathode coating is carried out in step 32, followed by drying of the cathode in step 33, especially for evaporation of the solvent. The drying is preferably carried out at a maximum temperature between 100° C and 150° C. In the following step 34, pressure treatment and a first heat treatment are employed for densification of the cathode. The steps can be carried out after each other or in parallel. This first heat treatment is preferably done at maximum temperatures of 600° C to 900° C. In subsequent step 35, the cathode is soaked in an aqueous carbon solution. Afterwards, a second heat treatment is carried out in step 36, preferably at maximum temperatures of 550°C to 850° C.

In this proposed method, the heat treatment is preferably divided into two steps before and after soaking into the aqueous carbon solution. The (maximum) temperature of the first heat treatment can be reduced to 900° C or less while still reducing the porosity compared to the method described with respect to Figure 3. However, the temperature is preferably higher than the temperature at which the oxidic materials are sintered. After the cathodic electrode is soaked into the aqueous carbon solution, the second heat treatment is carried out in order to convert the aqueous carbon solution in the pores of the electrode into conducting material. This carbonization process is preferably carried out at maximum temperatures between 550° C and 900° C. However, the maximum temperature of the second heat treatment is preferably the same as or lower than that of the second heat treatment in order to not affect the state of the sintered cathodic material.

Using this preferred method, the active area of the active materials is increased as pores in the cathodic electrode are filled with conducting materials. This contributes to reducing the resistance for the cathodic charge transfer. Second, the maximum temperatures for heat treatment can be reduced to less than 1000° C and preferably to equal or less than 900° C. This contributes to lowering manufacturing cost as well as preventing unwanted side reactions at the cathodic side as well as to the reduction of the resistance at the cathodic side (ohmic or charge transfer, diffusion in solid state), resulting in a better performance of the cathode.

## Claims

1. Method for fabricating a cathodic electrode for a solid state battery comprising the steps:
- coating (32),
- drying (33),
- soaking into aqueous carbon solution (35),
- heat treatment (34, 36).

2. Method of claim 1, **characterized in that** the heat treatment (34, 36) is divided into two separate heat treatment steps, a first heat treatment (34) and a later second heat treatment (36).

3. Method of claim 2, **characterized in that** the first heat treatment (34) is carried out before the soaking into the aqueous carbon solution (35) and the second heat treatment (36) is carried out after the soaking into the aqueous carbon solution (35).

4. Method of one of claims 2 or 3, **characterized in that** the first heat treatment (34) is carried out together with or after a pressure treatment.

5. Method of one of claims 2 to 4, **characterized in that** the first heat treatment (34) and the second heat treatment (36) are carried out at a maximum temperature below 1000° C, especially at 900° C or lower.

6. Method of one of claims 2 to 5, **characterized in that** the first heat treatment (34) is carried out at a maximum temperature between 600° C and 900° C.

7. Method of one of claims 2 to 6, **characterized in that** the second heat treatment (36) is carried out at a maximum temperature between 550° C and 850° C.

8. Method of one of claims 2 to 7, **characterized in that** a maximum temperature of the second heat treatment (34) is equal to or lower than a maximum temperature of the first heat treatment (36).

9. Method of one of the preceding claims, **characterized in that** before the coating (32) cathode active materials, carbon, oxide electrolyte and a solvent are mixed (31).

10. Method of claims 9, **characterized in that** a binder is added before the coating (31).

11. Method of one of the preceding claims **characterized in that** the drying (33) is carried out at a maximum temperature between 100° C and 150° C.
